# EUROPÄISCHE PATENTSCHRIFT

(11) **EP 4 212 597 B1**
(45) Veröffentlichungstag und Bekanntmachung des Hinweises auf die Patenterteilung: **14.10.2026**
(21) Anmeldenummer: 22152067.9
(22) Anmeldetag: 18.01.2022
(51) Int. Cl.: C09D 13/00

(54) **MINE ODER KREIDE ZUM MALEN, ZEICHNEN UND/ODER SCHREIBEN, UMHÜLLUNG FÜR EINEN STIFT UND STIFT**
LEAD OR CHALK FOR PAINTING, DRAWING AND / OR WRITING, ENVELOPE FOR PEN AND PEN
MINE OU CRAIE PERMETTANT DE PEINDRE, DE DESSINER ET/OU D'ÉCRIRE, ÉTUI POUR UN CRAYON ET CRAYON

(43) Veröffentlichungstag der Anmeldung: 19.07.2023
(73) Patentinhaber: Faber- Castell AG, 90546 Stein (DE)
(72) Erfinder: HEULER, Baukis, 90471 Nürnberg (DE); PÖLLMANN, Christian, 90765 Fürth (DE); LUGERT, Gerhard, 90431 Nürnberg (DE)
(74) Vertreter: Meissner Bolte Nürnberg

(56) Entgegenhaltungen:
- EP-A1- 2 053 106
- EP-A1- 2 551 307
- EP-A1- 3 042 937
- EP-A1- 3 042 938
- EP-A1- 3 772 532
- DE-U1- 9 409 245
- US-A1- 2017 349 775
- SIGMA-ALDRICH: "Product Specification Poly(ethylene-alt-maleic anhydride)", 6 July 2022 (2022-07-06), XP055939411, Retrieved from the Internet <URL:https://www.sigmaaldrich.com/specification-sheets/198/136/188050-BULK_______ALDRICH__.pdf> [retrieved on 20220706]
- SIGMA-ALDRICH: "Product Specification Polyethylene-graft-maleic anhydride", 6 July 2022 (2022-07-06), XP055939408, Retrieved from the Internet <URL:https://www.sigmaaldrich.com/specification-sheets/867/716/456624-BULK_______ALDRICH__.pdf> [retrieved on 20220706]
- CLARIANT: "Licocene PE MA 4221", 12 September 2017 (2017-09-12), XP055939426, Retrieved from the Internet <URL:www.clariant.com/en/Solutions/Products/2014/03/18/16/33/Licocene-PE-MA-4221-fine-grain> [retrieved on 20220706]

## Beschreibung

Die Erfindung betrifft eine Mine oder Kreide zum Malen, Zeichnen und/oder Schreiben für Stifte, beispielsweise für Fallminenstifte oder für holzgefasste oder eine Umhüllung aus einem Holzersatzwerkstoff aufweisende Stifte, zum Malen, Zeichnen und/oder Schreiben mit einer Grundmasse (oder: Minengrundmasse) enthaltend zumindest ein Wachs und zumindest eine weitere Komponente, und mit zumindest einem Farbmittel. Ferner betrifft die Erfindung eine Umhüllung aus einem Holzersatzwerkstoff bzw. einen Holzersatzwerkstoff für eine Umhüllung für einen Stift mit einer Grundmasse (oder: Umhüllungsgrundmasse) enthaltend zumindest ein Wachs und eine weitere Komponente, und mit zumindest einem Füllstoff. Des Weiteren betrifft die Erfindung einen Stift mit einer solchen Mine oder Kreide und/oder Umhüllung aus einem Holzersatzwerkstoff.

Kreiden und Minen innerhalb von Fallminenstiften sowie Minen für holzgefasste oder eine Umhüllung aus einem Holzersatzwerkstoff aufweisende Stifte zum Malen, Zeichnen und Schreiben, werden seit mehreren Jahren als in der Regel zylindrische Körper unter Verwendung thermoplastisch verarbeitbarer Feststoffzusammensetzungen hergestellt. Aus der EP 1 552 958 A2 sind beispielsweise wasserlösliche Minenmassen mit Zuckern oder Zuckeralkoholen und Zellulosederivaten bekannt, die mit kleinen Mengen Wasser bis zu 2 % hergestellt werden können. Bei wasserlöslichen Minen können Aufstriche auf Papier, insbesondere auch auf Aquarellpapier, aufgebracht werden und diese anschließend mit nassen Pinseln verteilt, d. h. aquarelliert, werden.

Es existieren außerdem Minen mit einer Minengrundmasse auf Fett- und Wachsbasis, welche Aluminiumdistearat und oxidiertes Polyethylenwachs mit Fettsäuren enthalten und für Farbstifte und als Kreiden gut geeignet sind. Solche Minen sind beispielsweise in EP 2 520 442 A1 beschrieben. Mit diesen Minen auf Papier aufgebrachte Farbaufstriche lassen sich jedoch nur wenig auf den Papieren mischen oder auch aquarellieren, was gerade für Künstlerprodukte notwendig ist. Auch lassen sich mit den beschriebenen Minen keine weichen oder sehr weichen Minen herstellen, die insbesondere für Künstleranwendungen oder aber auch für Trockentextmarkierminen, d. h. Leuchtminen, die mit Tagesleuchtfarbenpigmenten versetzt sind, verwendet werden.

EP 3 772 532 A1 offenbart eine Farbstiftmine oder Farbkreide mit einer Minengrundmasse, die neben Füllstoffen und Farbmitteln oxidiertes Ethylen Vinylacetat Wachs (EVA) und funktionalisiertes Metallocen-Polyolefinwachs enthält. Um eine gute Übermalbarkeit bzw. Aquarellierbarkeit zu erreichen, ist jedoch ein vergleichsweise hoher Anteil an EVA notwendig, wodurch die Minen im Gegenzug eine geringere Flexibilität aufweisen und spröder sind. Ferner zeigen diese Minen beim Aquarellieren Farbveränderungen und können beispielsweise nicht mit Tagesleuchtfarbenpigmenten hergestellt werden. Bei der Herstellung der Minen reagieren die einzelnen Rohmaterialien zudem langsam, wodurch der Herstellungsprozess weniger effizient ist. Das Verhalten ist zudem weniger gleitfähig im Abstrich.

EP 3 042 937 A1 offenbart eine Mine oder Kreide enthaltend Graphit, wobei das Graphit in einem polymeren Bindemittel gebunden ist, welches eine Mischung aus einem Polyolefin und Polystyrol ist. Die Mine kann ferner ein Wachs, beispielsweise ein Paraffinwachs oder ein Polyolefinwachs, enthalten.

EP 3 042 938 A1 offenbart eine Mine oder Kreide enthaltend Graphit, wobei das Graphit in einer polymeren Bindemittelmatrix gebunden ist, wobei die Bindemittelmatrix zumindest teilweise aus einem Polymer besteht, welches ein mit Maleinsäureanhydrid gepfropftes Polyolefin ist.

Es ist daher Aufgabe der Erfindung Minen oder Kreiden zum Malen, Zeichnen und/oder Schreiben, insbesondere für den Künstlerbereich sowie für den Einsatz in sogenannten Trockentextmarkern, anzugeben, die ein weiches Aufstrichverhalten zeigen, eine vergleichsweise höhere Flexibilität und Durchbiegung aufweisen und zudem effektiv mittels Extrusionsverfahren hergestellt werden können. Ferner ist es Aufgabe der Erfindung eine Umhüllung für einen Stift sowie einen Stift mit einer solchen Mine und/oder Umhüllung anzugeben.

Die Aufgabe wird gelöst mit einer Mine oder Kreide zum Malen, Zeichnen und/oder Schreiben mit den Merkmalen gemäß Anspruch 1 sowie mit eine Umhüllung für einen Stift bzw. eine Mine eines Stiftes mit den Merkmalen gemäß Anspruch 2. Die Mine oder Kreide ist durch thermoplastische Verarbeitung und Extrusion einer zumindest ein Wachs und zumindest eine organische aliphatische Hydroxyverbindung. Ferner enthält die Mine oder Kreide zumindest ein Farbmittel. Die Umhüllung enthält zumindest einen Füllstoff. Erfindungsgemäß ist in der Grundmasse als Wachs ein Ethylensäure-Maleinanhydrid Copolymer oder ein Propylensäure-Maleinanhydrid Copolymer, und als organische aliphatische Hydroxyverbindung ein Alkohol, Zucker und/oder Zuckeralkohol enthalten.

Mit anderen Worten: Die erfindungsgemäße Mine oder Kreide enthält eine Grundmasse (oder: Minengrundmasse) enthaltend zumindest ein Wachs und zumindest eine organische aliphatische Hydroxyverbindung und zumindest ein Farbmittel. Ein Füllstoff kann bei der Mine oder Kreide zusätzlich optional enthalten sein. Die erfindungsgemäße Umhüllung für einen Stift, insbesondere für einen Stift mit einer erfindungsgemäßen Mine, enthält eine Grundmasse (oder: Umhüllungsgrundmasse) enthaltend zumindest ein Wachs und zumindest eine organische aliphatische Hydroxyverbindung und zumindest einen Füllstoff. Ein Farbmittel kann bei der Umhüllung zusätzlich optional enthalten sein.

Erfindungsgemäß ist in der Grundmasse als Wachs ein Olefinsäure-Maleinanhydrid Copolymer (oder: Polyolefinsäure-Maleinanhydrid Copolymer), nämlich ein Ethylensäure-Maleinanhydrid Copolymer oder ein Propylensäure-Maleinanhydrid Copolymer, und als organische aliphatische Hydroxyverbindung ein Alkohol, Zucker und/oder Zuckeralkohol enthalten.

Nachfolgend wird vereinfachend vorwiegend auf eine Mine oder Mine Bezug genommen. Die Ausführungen gelten jedoch selbstredend auch für Kreiden oder Umhüllungen.

Die Herstellung der Mine oder Kreide oder Umhüllung erfolgt in einem mehrstufigen Prozess. Zunächst werden die Rohmaterialien der Mine oder Kreide oder Umhüllung, also die Ausgangssubstanzen der Grundmasse, der beigemengte Füllstoff und/oder das oder die Farbmittel, gemischt und homogenisiert. Dies erfolgt üblicherweise in Schnellmischern, Knetern oder Compoundern oder auch in Schneckenextrudern sowie bei einer Temperatur zwischen 80 und 160°C, vorzugsweise zwischen 100 und 140°C. Dabei kommt es zu einer Erweichung der Grundmasse, wobei deren Konsistenz so beschaffen ist, dass sich trotz der ferner enthaltenen Füllstoffe und/oder Farbmittel sowie gegebenenfalls weiter enthaltenen Rohmaterialien, wie z.B. weiterer Wachse, Stränge extrudieren lassen. Zur Herstellung von Minen lassen sich beispielsweise Minenstränge mit einem Durchmesser von 3 bis 5 mm für Minen, bei der Herstellung von Kreiden lassen sich beispielsweise Kreidenstränge von bis zu 20 mm für Kreiden, extrudieren lassen.

Ein Aufschmelzen des oder der Wachse erfolgt somit unter Zugabe des Alkohols, Zuckers und/oder Zuckeralkohols und dem Ablaufen einer Polykondensationsreaktion nach dem folgenden Schema:

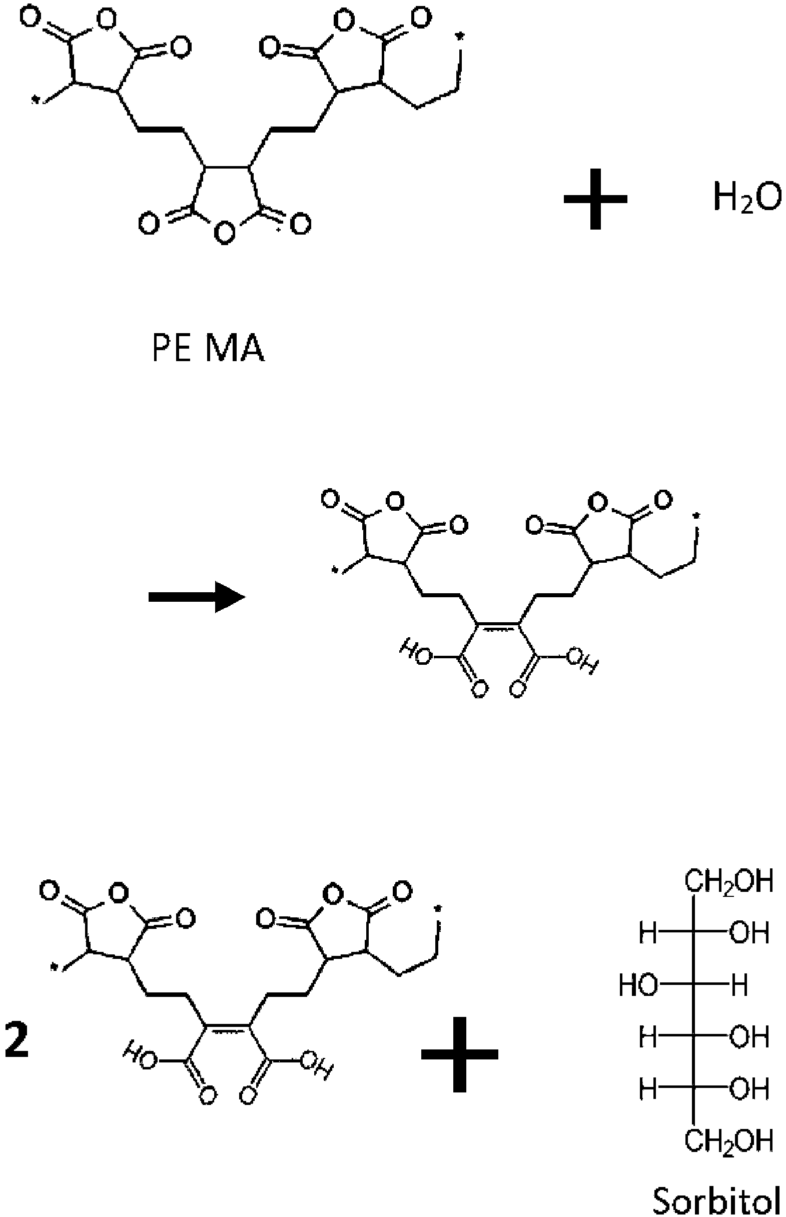

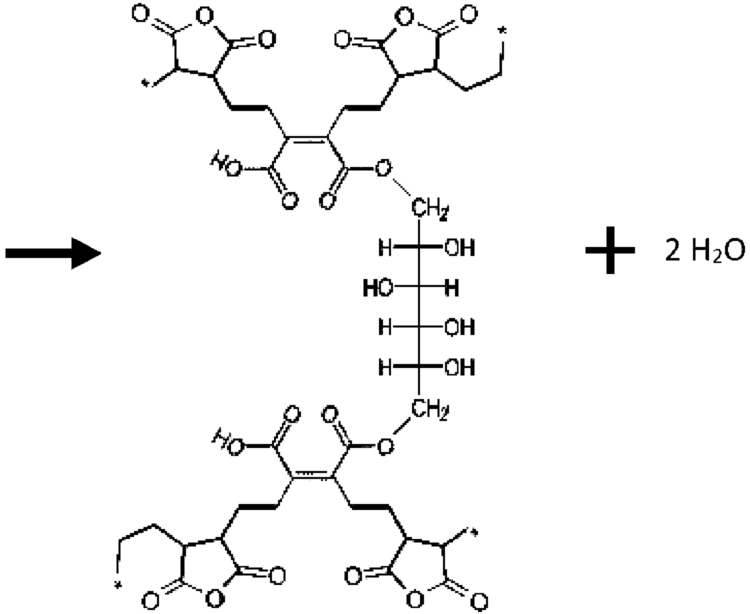

Da in den Rohmaterialien Wasser als Restfeuchte vorhanden ist, insbesondere in Höhe von maximal 2 Gew.-%, ist bei der Herstellung eine Zugabe von Wasser nicht zwingend erforderlich, um das Ablaufen der Reaktion zu ermöglichen.

Die Extrusion wird in Abhängigkeit von der Zusammensetzung und der Minen- oder Kreidendurchmesser in Temperaturprofilen zwischen 80 und 160 °C durchgeführt. Die erfindungsgemäßen Minen (oder Kreiden) lassen sich hierbei zu weichen Minensträngen ausformen. Die erhaltenen Minenstränge werden gegebenenfalls anschließend zu Minen abgelängt. Nach dem Erkalten der Minenmasse liegt bereits die fertige Mine vor, die eine ausreichend feste Konsistenz aufweist. Mit den Minen lassen sich auch mit geringen Anteilen an Farbmitteln farbkräftige und deckende Aufstriche auf einer Unterlage erzeugen. Die Herstellung von Stiften mit einer erfindungsgemäßen Mine und Umhüllung kann durch Co-Extrusion von Mine und Umhüllung erfolgen.

Die Mine oder Kreide oder Umhüllung ist somit aus einer die genannten Komponenten bzw. Ausgangsstoffe enthaltenen Grundmasse bzw. Ausgangsmasse hergestellt, die thermoplastisch verarbeitet und extrudiert wird, um die Ausgangsstoffe aufzuschmelzen und zu binden.

Nach einer Vielzahl von Versuchen hat sich überraschenderweise gezeigt, dass sich gerade Zusammensetzungen aus einem Olefinsäure-Maleinanhydrid-Compolymer und zwar einem Ethylensäure-Maleinanhydrid Copolymer (beispielsweise CAS-Nr. 9006-26-2) oder einem Propylensäure-Maleinanhydrid Copolymer zusammen mit Alkoholen, Zuckern und/oder Zuckeralkoholen als zielführend erwiesen haben, um der Aufgabenstellung gerecht werden. Die erfindungsgemäßen Minen bzw. Kreiden zeigen ein weiches Applikationsverhalten mit dem Ergebnis farbkräftiger und deckender Aufstriche, wobei sich die Farben gut vermischen lassen. Die Minen bzw. Kreiden oder auch Umhüllungen weisen ferner eine im Vergleich zu den zuvor genannten aus dem Stand der Technik bekannten Minen höhere Flexibilität auf und sind weniger spröde und somit auch weniger bruchanfällig beim Spitzen.

Als besonders geeignet hat sich hierbei eine Grundmasse aus einem Ethylensäure-Maleinanhydrid Copolymer oder einem Propylensäure-Maleinanhydrid Copolymer in Mischung mit Zuckeralkoholen erwiesen. Die beiden Komponenten zeigten ohne Zugabe von Wasser eine sehr gute Reaktion und lassen sich gut einwiegen. Bei der Verwendung von Zuckeralkoholen gelingt die homogene Verschmelzung bzw. Vermischung - im Vergleich zu Zuckern - leichter, da sich diese Substanzen oberhalb von 100°C ohne Anwendung erhöhten Drucks zunächst wasserklar aufschmelzen lassen.

Das Aufstrichverhalten der Minen oder Kreiden und die Verarbeitbarkeit der Grundmasse lassen sich ferner durch die Wahl des Tropfpunktes des Copolymers steuern. Der Tropfpunkt ist zum einen entscheidend für das gute Aufstrichverhalten der Mine, zum anderen wird dadurch die Verarbeitungstemperatur während der Extrusion im Wesentlichen mitbestimmt. Vorzugsweise wird ein Copolymer eingesetzt, welches einen Tropfpunkt zwischen 80 und 160 °C, insbesondere einen Tropfpunkt zwischen 100 und 140 °C aufweist. Bei diesen Temperaturen bildet sich durch Vermischen mit der weiteren Komponente sowie den weiteren Bestandteilen eine sehr gut extrudierbare Masse aus. Die erfindungsgemäß eingesetzten Copolymere sind Ethylensäure-Maleinsäureanhydrid Copolymere oder Polypropylensäure-Maleinsäureanhydrid Copolymere, die beispielsweise unter den Handelsnamen Licocene PP MA 6252¹⁾ (Tropfpunkt: 137 - 142°C; Säurezahl: 38 - 45 mg KOH/g), Licocene PE MA 4351¹⁾ (Tropfpunkt: 120 - 126°C; Säurezahl: 42 - 49 mg KOH/g) oder Licocene PE MA 4221¹⁾ (Tropfpunkt: 120 - 126°C; Säurezahl: 16 - 20 mg KOH/g) erhältlich sind.

Ferner hat es sich bewährt, wenn das Ethylensäure-Maleinsäureanhydrid Copolymer oder Propylensäure-Maleinsäureanhydrid Copolymer, in der Grundmasse mit einem Anteil von 1 bis 60 Gew.-%, insbesondere mit einem Anteil von 2 bis 55 Gew.-% - bezogen auf die Gesamtmasse der Mine oder Kreide oder Umhüllung -enthalten ist.

Sofern in der Grundmasse ein Alkohol enthalten ist, ist dies insbesondere ein Diol und/oder ein Triol, insbesondere Glycerin.

Sofern in der Grundmasse ein Zucker enthalten ist, kommen insbesondere Glucose, Fruktose, Maltose und/oder Laktose in Betracht.

Der Einsatz eines Zuckeralkohols hat sich als besonders geeignet erwiesen. Sofern in der Grundmasse ein Zuckeralkohol enthalten ist, werden insbesondere Mannit, Lactit, Xylit, Erythrit, Arabit, Threit, Sorbit, Adonit und/oder Dulcit eingesetzt.

Für die organische aliphatische Hydroxyverbindung, also den Alkohol, den Zucker und/oder den Zuckeralkohol, hat es sich als besonders geeignet erwiesen, wenn diese in der Grundmasse mit einem Anteil von 0,1 bis 20 Gew.-%, insbesondere mit einem Anteil von 0,1 bis 5 Gew.-% - bezogen auf die Gesamtmasse der Mine oder Kreide oder Umhüllung - enthalten ist.

Das Eigenschaftsspektrum der Mine oder Kreide, etwa deren Konsistenz und Abstrichverhalten, kann auch durch die Zugabe von Füllstoffen bei der Herstellung der Minen beeinflusst werden. Gemäß einer vorteilhaften Ausführungsform ist in der Mine oder Kreide zumindest ein Füllstoff enthalten, wobei der zumindest eine Füllstoff in der Mine oder Kreide insbesondere mit einem Anteil von 0 bis 80 Gew.-%, insbesondere mit einem Anteil von 10 bis 60 Gew.-% - bezogen auf die Gesamtmasse der Mine - enthalten ist. In einer Umhüllung ist der zumindest eine Füllstoff insbesondere mit einem Anteil von 40 bis 80 Gew.-% - bezogen auf die Gesamtmasse der Umhüllung - enthalten.

Für den Einsatz in einer Mine oder Kreide eignen sich als Füllstoffe vor allem anorganische Füllstoffe, vorzugsweise in fein pulverisierter Form, insbesondere Talkum, Bimsmehl, Kaolin, Glimmer, Aluminiumsilikat, Ton und/oder Calciumcarbonat. Bei einer Umhüllung sind vor allem organische Füllstoff, insbesondere Zellulosefasern, Holzfasern und/oder Textilfasern geeignet.

Um farbkräftige und deckende Abstriche erzeugen zu können, ist es ausreichend und vorteilhaft, dass das Farbmittel in der Mine oder Kreide mit einem Anteil von 0,1 - 40 Gew.-%, insbesondere mit einem Anteil von 1 - 40 Gew.-%- bezogen auf die Gesamtmasse der Mine - enthalten ist. Mit einem geringen Anteil von maximal 1 Gew.-% lassen sich beispielsweise Minen oder Kreiden in Pastellfarben herstellen. In der Umhüllung kann ein Farbmittel enthalten sein, insbesondere mit einem Anteil von 0,1 - 40 Gew.-%, insbesondere mit einem Anteil von 0,1 - 20 Gew.-% - bezogen auf die Gesamtmasse der Umhüllung.

Die in der Mine oder Kreide oder Umhüllung enthaltenen Farbmittel sind vorzugsweise anorganische Farbpigmente und/oder organische Farbpigmente und/oder Farbstoffe. Vorzugsweise werden anorganische Pigmente, wie Eisenoxide, Titandioxid, Lithopone (Mischung aus Bariumsulfat und Zinksulfid) oder Ruß, oder organische Pigmente wie beispielsweise Pigmente aus der Gruppe der Azo-Pigmente, Phthalocyanin-Pigmente, Perylen-Pigmente, DPP-Pigmente, aber auch Tagesleuchtfarben-Pigmente oder Farbstoffe sowie Effekt-Pigmente aus Glitter / Glimmer oder Glas oder Metallpartikel, z.B. Aluminium oder Bronze, enthaltende Pigmente eingesetzt.

Um die Mine gleitfähiger zu machen und auch die Extrusion bei der Herstellung der Minen oder Kreiden oder Umhüllung zu verbessern, können bei einer bevorzugten Ausführungsform in der Grundmasse zusätzlich auch weitere Wachse und/oder Trigylceride und/oder Fettsäuren und/oder Fettsäurederivate enthalten sein. Dadurch lassen sich eine gute Ausformbarkeit der Minen, Kreiden oder Umhüllung bei der Extrusion sowie gute Applikationseigenschaften bei späterer Benutzung der Mine fördern.

Vorzugsweise sind die weiteren Wachse und/oder Triglyceride und/oder Fettsäuren und/oder Fettsäurederivate in der Grundmasse mit einem Anteil von maximal 30 Gew.-%, insbesondere 3 bis 30 Gew.-%, besonders bevorzugt 5 bis 20 Gew.-% - bezogen auf die Gesamtmasse der Mine oder Kreide oder Umhüllung - enthalten.

Insbesondere werden als weitere Wachse und/oder Triglyceride und/oder Fettsäuren und/oder Fettsäurederivate Paraffinwachse, Montanwachse, Fettsäureester, insbesondere Ester der Myristin-, Palmitin- oder Stearinsäure, Reiswachs, Bienenwachs, Naturwachse, insbesondere Carnaubawachs, Rapswachse, gehärtete Pflanzenwachse, insbesondere hydriertes Sojabohnenöl oder hydriertes Rhizinusöl, und/oder Stearinsäure.

Zusammenfassend lässt sich für die erfindungsgemäße Mine oder Kreide folgende Basisrezeptur angeben:

| | |
|---|---|
| Olefinsäure-Maleinanhydrid Copolymer | 1 bis 60 Gew. % |
| Diole, Triole, Zucker und/oder Zuckeralkohol | 0,1 bis 20 Gew. % |
| Füllstoffe | 0 bis 80 Gew. % |
| Farbmittel | 0,1 bis 40 Gew. % |
| Wachse, Trigylceride, Fettsäuren und -derivate | 0 bis 30 Gew.-% |

Zusammenfassend lässt sich für die erfindungsgemäße Umhüllung folgende Basisrezeptur angeben:

| | |
|---|---|
| Olefinsäure-Maleinanhydrid Copolymer | 1 bis 60 Gew. % |
| Diole, Triole, Zucker und/oder Zuckeralkohol | 0,1 bis 20 Gew. % |
| Füllstoffe | 40 bis 80 Gew. % |
| Farbmittel | 0 bis 40 Gew. % |
| Wachse, Trigylceride, Fettsäuren und -derivate | 0 bis 30 Gew.-% |

Die letztgenannte Aufgabe wird gelöst mit einem Stift mit einer erfindungsgemäßen Mine und/oder Umhüllung. Die Herstellung solcher Stifte mit einer erfindungsgemäßen Mine und Umhüllung kann insbesondere durch Co-Extrusion von Mine und Umhüllung erfolgen.

Nachfolgend sind fünf Beispielrezepturen für Minen bzw. Kreiden, genauer Farbminen bzw. Farbkreiden und für eine Umhüllung aus einem Holzersatzwerkstoff angeführt. Die Minen bzw. Kreiden bzw. die Umhüllung wurden wie zuvor beschrieben hergestellt. In einem ersten Schritt erfolgte also eine Vermischung und Homogenisierung der Rohmaterialien in Schnellmischern bei erhöhten Temperaturen von etwa 100 bis 140°C, wobei ein Aufschmelzen der Wachse und Ablaufen der Reaktion erfolgt. In einem weiteren Schritt wurden die Minen oder Kreiden bzw. die Umhüllung mit einem Schneckenextruder ausgeformt, wobei die Temperatur bei der Extrusion in Abhängigkeit der zu extrudierenden Stränge gewählt wurde. Zur Herstellung der Minen mit einem Durchmesser zwischen 2 und 5 mm erfolgte die Extrusion bei einer Temperatur von etwa 110°C. Die Extrusion der Kreiden mit einem Durchmesser von 12 mm erfolgte bei einer Temperatur von etwa 100°C. Anschließend wurden die Minen- bzw. Kreidenstränge abgelängt. Die Angaben in den Beispielrezepturen in Gewichtsprozent beziehen sich jeweils auf die Anteile in der Gesamtmasse der Mine bzw. der Umhüllung. Die Herstellung von Stiften aufweisend eine solche Mine und Umhüllung kann beispielsweises durch Co-Extrusion der Minen und der Umhüllung erfolgen.

### Beispiel 1:

Beispielrezeptur für eine blaue Mine mit einem Durchmesser von 4,0 mm:

| | | |
|---|---|---|
| Ethylensäure-Maleinanhydrid Copolymer Licocene PP MA 6252¹⁾ | 25,0 | Gew. % |
| Glycerin | 5,0 | Gew. % |
| Stearin (CAS 57-11-4) | 5,0 | Gew. % |
| Lithopone DS (CAS 7727-43-7, 1314-98-3) | 30,0 | Gew. % |
| Wachscompound (CAS 63231-60-7) | 10,0 | Gew. % |
| Blaupigment (P.B.15:3 CI-Nr. 74160) | 5,0 | Gew. % |
| Talkum (CAS 14807-96-6) | 20,0 | Gew. % |

### Beispiel 2:

Beispielrezeptur für eine gelbe Mine mit Tagesleuchtpigment und mit einem Durchmesser von 5 mm:

| | | |
|---|---|---|
| Licocene PE MA 4351¹⁾ | 50,0 | Gew. % |
| Sorbitol (CAS 50-70-4) | 3,5 | Gew. % |
| Polycerin Hydro RD 907 (CAS 8016-70-4) | 1,5 | Gew. % |
| Wachscompound (CAS 43231-60-7) | 1,5 | Gew. % |
| Stearin (CAS 57-11-4) | 7,5 | Gew. % |
| Titandioxid (P.W.6 CI 77891) | 4,0 | Gew. % |
| Kaolin (CAS 1332-58-7) | 25,0 | Gew. % |
| Pigment Yellow 101 (CI 48052) | 7,0 | Gew. % |

Die Minen gemäß Beispiel 2 zeigen eine gute Transparenz und besitzen aufgrund des hohen Wachsgehaltes eine weiche Abgabe bei der Applikation. Ferner kommt bei Beispiel 2 ein bevorzugter Zuckeralkohol zum Einsatz, wodurch die Verarbeitbarkeit der Minenmasse verbessert wird.

### Beispiel 3:

Beispielrezeptur für eine rote Mine mit einem Durchmesser von 2,5 mm:

| | | |
|---|---|---|
| Licocene PE MA 4221¹⁾ | 6,0 | Gew. % |
| 1,2 Propandiol | 0,4 | Gew. % |
| Stearin (CAS 57-11-4) | 3,0 | Gew. % |
| Polycerin Hydro RD 907 (CAS 8016-70-4, 63231-60-7) | 6,0 | Gew. % |
| Kaolin (CAS 1332-58-7) | 53,0 | Gew. % |
| Titandioxid | 25,0 | Gew. % |
| Rotpigment (Pigment Red 254 CI 56110) | 6,6 | Gew. % |

### Beispiel 4:

Beispielrezeptur für eine orange Kreide mit einem Durchmesser von 12 mm:

| | | |
|---|---|---|
| Ethylene-Maleic-Anhydride Copolymer²⁾ | 10,0 | Gew. % |
| Mannose | 4,0 | Gew. % |
| Kaolin (CAS 1332-58-7) | 55,0 | Gew. % |
| Myrestinsäure (CAS 544-63-8) | 5,0 | Gew. % |
| Bienenwachs | 5,0 | Gew. % |
| Wachscompound RD 980 (Palmstearin, gehärteten pflanzlichen Ölen und Paraffinen und mikrokristallinem Wachs)³⁾ | 5,0 | Gew. % |
| Orangepigment (Pigment Orange 34 CI 21115) | 16,0 | Gew. % |

Die Kreide gemäß Beispiel 4 ist bruchstabiler und weist eine vergleichsweise sehr weiche Abgabe auf.

### Beispiel 5:

Beispielrezeptur für eine Umhüllung aus einem Holzersatzwerkstoff für eine Mine:

| | |
|---|---|
| Licocene PE MA 4351¹⁾ | 20 Gew.-% |
| Mannitol | 5 Gew.-% |
| Arbocel B600⁴⁾ | 75 Gew.-% |

### Hersteller:

1) Clariant Plastics & Coatings (Deutschland GmbH), Ludwig-Hermann-Str. 100, D-86368 Gersthofen
2) Mulei (Wuhan) New Material Technology Co. Ltd. Office 1201, Block C, Han Street Headquarter International Plaza, Zhongbei Road, Wuchang District, Wuhan, Hubei Province, China
3) Th.C. Tromm GmbH, Delmenhorster Str. 4, D-50735 Köln
4) J. Rettenmaier & Söhne GmbH + Co KG, Holzmühle 1, D-73494 Rosenberg

## Patentansprüche

1. Mine oder Kreide zum Malen, Zeichnen und/oder Schreiben hergestellt durch thermoplastische Verarbeitung und Extrusion einer als Ausgangsstoffe zumindest ein Wachs, zumindest eine weitere organische aliphatische Hydroxyverbindung und zumindest ein Farbmittel enthaltenden Grundmasse,
**dadurch gekennzeichnet, dass**
als Wachs ein Ethylensäure-Maleinanhydrid Copolymer oder ein Propylensäure-Maleinanhydrid Copolymer und als organische aliphatische Hydroxyverbindung ein Alkohol, Zucker und/oder Zuckeralkohole enthalten ist.

2. Umhüllung für eine Mine oder Kreide zum Malen, Zeichnen und/oder Schreiben nach Anspruch 1, hergestellt durch thermoplastische Verarbeitung und Extrusion einer als Ausgangsstoffe zumindest ein Wachs, zumindest eine weitere organische aliphatische Hydroxyverbindung und zumindest einen Füllstoff enthaltenden Grundmasse,
**dadurch gekennzeichnet, dass**
als Wachs ein Ethylensäure-Maleinanhydrid Copolymer oder ein Propylensäure-Maleinanhydrid Copolymer und als organische aliphatische Hydroxyverbindung ein Alkohol, Zucker und/oder Zuckeralkohole enthalten ist.

3. Mine oder Kreide nach Anspruch 1 oder Umhüllung nach Anspruch 2,
**dadurch gekennzeichnet, dass**
das Ethylensäure-Maleinanhydrid Copolymere oder Propylensäure-Maleinanhydrid Copolymer oder Maleinsäureanhydrid gepfropftes Copolymer einen Tropfpunkt zwischen 80 und 160 °C, insbesondere einen Tropfpunkt zwischen 100 und 140 °C aufweist.

4. Mine oder Kreide nach einem der Ansprüche 1 oder 3 oder Umhüllung nach einem der Ansprüche 2 oder 3,
**dadurch gekennzeichnet, dass**
das Ethylensäure-Maleinanhydrid Copolymere oder Propylensäure-Maleinanhydrid Copolymer oder Maleinsäureanhydrid gepfropftes Copolymer mit einem Anteil von 1 bis 60 Gew.-%, insbesondere mit einem Anteil von 2 bis 55 Gew.-% enthalten ist.

5. Mine oder Kreide nach einem der Ansprüche 1, 3 oder 4 oder Umhüllung nach einem der Ansprüche 2, 3 oder 4,
**dadurch gekennzeichnet, dass**
als Alkohol ein Diol und/oder Triol, insbesondere Glycerin, enthalten ist

6. Mine oder Kreide nach einem der Ansprüche 1, 3 bis 5 oder Umhüllung nach einem der Ansprüche 2 bis 5,
**dadurch gekennzeichnet, dass**
als Zucker Glucose, Fruktose, Maltose und/oder Laktose enthalten ist.

7. Mine oder Kreide nach einem der Ansprüche 1, 3 bis 6 oder Umhüllung nach einem der Ansprüche 2 bis 6,
**dadurch gekennzeichnet, dass**
als Zuckeralkohol Mannit, Lactit, Xylit, Erythrit, Arabit, Threit, Sorbit, Adonit, Dulcit enthalten ist.

8. Mine oder Kreide nach einem der Ansprüche 1, 3 bis 7 oder Umhüllung nach einem der Ansprüche 2 bis 7,
**dadurch gekennzeichnet, dass**
die organische aliphatische Hydroxyverbindung mit einem Anteil von 0,1 bis 20 Gew.-%, insbesondere mit einem Anteil von 0,1 bis 5 Gew.-% enthalten ist.

9. Mine oder Kreide nach einem der Ansprüche 1, 3 bis 8 oder Umhüllung nach einem der Ansprüche 2 bis 8,
**dadurch gekennzeichnet,**
**dass** in der Mine oder Kreide zumindest ein Füllstoff enthalten ist, wobei der zumindest eine Füllstoff insbesondere mit einem Anteil von 0 bis 80 Gew.-%, besonders bevorzugt mit einem Anteil von 10 bis 60 Gew.-% enthalten ist, und/oder,
**dass** in der Umhüllung zumindest ein Füllstoff enthalten ist, wobei der zumindest eine Füllstoff insbesondere mit einem Anteil von 40 bis 80 Gew.-% enthalten ist.

10. Mine oder Kreide nach einem der Ansprüche 1, 3 bis 9 oder Umhüllung nach einem der Ansprüche 2 bis 9,
**dadurch gekennzeichnet,**
**dass** in der Mine oder Kreide zumindest ein Füllstoff enthalten ist, wobei als Füllstoff zumindest ein anorganischer Füllstoff, insbesondere Talkum, Bimsmehl, Kaolin, Glimmer, Aluminiumsilikat, Ton und/oder Calciumcarbonat, und/oder zumindest ein organischer Füllstoff enthalten ist, und/oder
**dass** in der Umhüllung zumindest ein Füllstoff enthalten ist, wobei als Füllstoff zumindest ein organischer Füllstoff, insbesondere Holzfasern und/oder Cellulosefasern und/oder Textilfasern enthalten ist.

11. Mine oder Kreide nach einem der Ansprüche 1, 3 bis 10 oder Umhüllung nach einem der Ansprüche 2 bis 10,
**dadurch gekennzeichnet,**
**dass** in der Mine oder Kreide zumindest ein Farbmittel enthalten ist, wobei das zumindest eine Farbmittel mit einem Anteil von 0,1 - 40 Gew.-%, insbesondere mit einem Anteil von 1 bis 40 Gew.-% enthalten ist, und/oder
**dass** in der Umhüllung zumindest ein Farbmittel enthalten ist, wobei das zumindest eine Farbmittel mit einem Anteil von 0,1 - 40 Gew.-%, insbesondere mit einem Anteil von 0,1 -20 Gew.-% enthalten ist.

12. Mine oder Kreide nach einem der Ansprüche 1, 3 bis 11 oder Umhüllung nach einem der Ansprüche 2 bis 11,
**dadurch gekennzeichnet, dass**
in der Grundmasse zumindest ein Farbmittel enthalten ist, wobei als Farbmittel zumindest ein anorganisches Farbpigment und/oder zumindest ein organisches Farbpigment und/oder Farbstoff enthalten ist.

13. Mine oder Kreide nach einem der vorhergehenden Ansprüche 1, 3 bis 12 oder Umhüllung nach einem der Ansprüche 2 bis 12,
**dadurch gekennzeichnet, dass**
in der Grundmasse weitere Wachse und/oder Triglyceride und/oder Fettsäuren und/oder Fettsäurederivate enthalten sind, insbesondere Paraffinwachse, Montanwachse, Fettsäureester, insbesondere Ester der Myristin-, Palmitin- oder Stearinsäure, Reiswachs, Bienenwachs, Naturwachse, insbesondere Carnaubawachs, Rapswachse, gehärtete Pflanzenwachse, insbesondere hydriertes Sojabohnenöl oder hydriertes Rhizinusöl, und/oder Stearinsäure enthalten sind.

14. Mine oder Kreide oder Umhüllung nach Anspruch 13,
**dadurch gekennzeichnet, dass**
die weiteren Wachse und/oder Triglyceride und/oder Fettsäuren und/oder Fettsäurederivate mit einem Anteil von maximal 30 Gew.-%, insbesondere 3 bis 30 Gew.-%, besonders bevorzugt mit einem Anteil von 5 bis 20 Gew.-% enthalten sind.

15. Stift mit einer Mine oder Kreide nach einem der Ansprüche 1 bis 14 und/oder einer Umhüllung nach einem der Ansprüche 2 bis 14.

## Claims

1. A lead or chalk for painting, drawing and/or writing, produced by thermoplastic processing and extrusion of a base composition comprising, as starting materials, at least one wax, at least one further organic aliphatic hydroxy compound and at least one colouring agent,
**characterised in that**
the wax comprises an ethylene acid-maleic anhydride copolymer or a propylene acid-maleic anhydride copolymer, and the organic aliphatic hydroxy compound comprises an alcohol, a sugar and/or sugar alcohols.

2. A coating for a lead or chalk for painting, drawing and/or writing according to claim 1, produced by thermoplastic processing and extrusion of a base composition comprising, as starting materials, at least one wax, at least one further organic aliphatic hydroxy compound and at least one filler,
**characterised in that**
the wax comprises an ethylene acid-maleic anhydride copolymer or a propylene acid-maleic anhydride copolymer, and the organic aliphatic hydroxy compound comprises an alcohol, a sugar and/or sugar alcohols.

3. A lead or chalk according to claim 1, or a coating according to claim 2,
**characterised in that**
the ethylene acid-maleic anhydride copolymer or propylene acid-maleic anhydride copolymer or maleic anhydride-grafted copolymer has a dropping point of between 80 and 160 °C, in particular a dropping point between 100 and 140 °C.

4. A lead or chalk according to any of claims 1 or 3, or a coating according to any of claims 2 or 3,
**characterised in that**
the ethylene acid-maleic anhydride copolymer or propylene acid-maleic anhydride copolymer or maleic anhydride-grafted copolymer is present in a proportion of 1 to 60 % by weight, in particular in a proportion of 2 to 55 % by weight.

5. A lead or chalk according to any one of claims 1, 3 or 4, or a coating according to any one of claims 2, 3 or 4,
**characterised in that**
it contains a diol and/or triol, in particular glycerine, as the alcohol.

6. A lead or chalk according to any of claims 1, 3 to 5, or a coating according to any of claims 2 to 5,
**characterised in that**
it contains glucose, fructose, maltose and/or lactose as the sugar.

7. A lead or chalk according to any one of claims 1, 3 to 6, or a coating according to any one of claims 2 to 6,
**characterised in that**
it contains mannitol, lactitol, xylitol, erythritol, arabil, treitol, sorbitol, adonitol or dulcitol as the sugar alcohol.

8. A lead or chalk according to any one of claims 1, 3 to 7, or a coating according to any one of claims 2 to 7,
**characterised in that**
the organic aliphatic hydroxy compound is present in a proportion of 0.1 to 20% by weight, in particular in a proportion of 0.1 to 5% by weight.

9. A lead or chalk according to any one of claims 1, 3 to 8, or a coating according to any one of claims 2 to 8,
**characterised in**
**that** the lead or chalk contains at least one filler, wherein the at least one filler is present, in particular, in a proportion of 0 to 80% by weight, particularly preferably in a proportion of 10 to 60% by weight, and/or,
**that** the coating contains at least one filler, wherein the at least one filler is present, in particular, in a proportion of 40 to 80% by weight.

10. A lead or chalk according to any one of claims 1, 3 to 9, or a coating according to any one of claims 2 to 9,
**characterised in**
**that** the lead or chalk contains at least one filler, wherein the filler comprises at least one inorganic filler, in particular talc, pumice powder, kaolin, mica, aluminium silicate, clay and/or calcium carbonate, and/or at least one organic filler, and/or
**that** the coating contains at least one filler, wherein the filler comprises at least one organic filler, in particular wood fibres and/or cellulose fibres and/or textile fibres.

11. A lead or chalk according to any one of claims 1, 3 to 10, or a coating according to any one of claims 2 to 10,
**characterised in**
**that** the lead or chalk contains at least one colouring agent, wherein the at least one colouring agent is present in a proportion of 0.1-40% by weight %, in particular 1-40% by weight, and/or
**that** the coating contains at least one colouring agent, wherein the at least one colouring agent is present in a proportion of 0.1-40% by weight, in particular 0.1-20% by weight.

12. A lead or chalk according to any one of claims 1, 3 to 11, or a coating according to any one of claims 2 to 11,
**characterised in that**
the base composition contains at least one colouring agent, wherein the colouring agent comprises at least one inorganic colour pigment and/or at least one organic colour pigment and/or dye.

13. A lead or chalk according to any one of the preceding claims 1, 3 to 12, or a coating according to any one of claims 2 to 12,
**characterised in that**
the base composition contains further waxes and/or triglycerides and/or fatty acids and/or fatty acid derivatives, in particular paraffin waxes, coal waxes, fatty acid esters, in particular esters of myristic, palmitic or stearic acid, rice wax, beeswax, natural waxes, in particular carnauba wax, rapeseed waxes, hydrogenated vegetable waxes, in particular hydrogenated soya bean oil or hydrogenated castor oil, and/or stearic acid.

14. A lead or chalk or coating according to claim 13,
**characterised in that**
the additional waxes and/or triglycerides and/or fatty acids and/or fatty acid derivatives are present in a proportion of at most 30% by weight, in particular 3 to 30% by weight, and most preferably in a proportion of 5 to 20% by weight.

15. A pen comprising a lead or chalk according to any one of claims 1 to 14 and/or a coating according to any one of claims 2 to 14.

## Revendications

1. Mine ou craie destinée à la peinture, au dessin et/ou à l'écriture, obtenue par transformation thermoplastique et extrusion d'une composition de base contenant, comme matières premières, au moins une cire, au moins un autre composé hydroxylé aliphatique organique et au moins un colorant,
**caractérisée en ce que**
elle contient, comme cire, un copolymère d'acide éthylénique et d'anhydride maléique ou un copolymère d'acide propylénique et d'anhydride maléique, et, comme composé hydroxylé aliphatique organique, un alcool, un sucre et/ou des alcools de sucre.

2. Enrobage pour une mine ou une craie destinée à la peinture, au dessin et/ou à l'écriture selon la revendication 1, fabriquée par transformation thermoplastique et extrusion d'une masse de base contenant, comme matières premières, au moins une cire, au moins un autre composé hydroxylé aliphatique organique et au moins une charge,
**caractérisée en ce que**
elle contient, en tant que cire, un copolymère d'acide éthylénique et d'anhydride maléique ou un copolymère d'acide propylénique et d'anhydride maléique, et, en tant que composé hydroxylé aliphatique organique, un alcool, un sucre et/ou des alcools de sucre.

3. Mine ou craie selon la revendication 1 ou enrobage selon la revendication 2,
**caractérisé en ce que**
le copolymère d'acide éthylénique et d'anhydride maléique ou le copolymère d'acide propylénique et d'anhydride maléique ou le copolymère greffé d'anhydride maléique présente un point de goutte compris entre 80 et 160 °C, en particulier un point de goutte compris entre 100 et 140 °C.

4. Mine ou craie selon l'une des revendications 1 ou 3, ou enrobage selon l'une des revendications 2 ou 3,
**caractérisée en ce que**
le copolymère d'acide éthylénique et d'anhydride maléique, le copolymère d'acide propylénique et d'anhydride maléique ou le copolymère greffé d'anhydride maléique est présent à raison de 1 à 60 % en poids, en particulier à raison de 2 à 55 % en poids.

5. Mine ou craie selon l'une des revendications 1, 3 ou 4, ou enrobage selon l'une des revendications 2, 3 ou 4,
**caractérisée en ce que**
elle contient, en tant qu'alcool, un diol et/ou un triol, en particulier du glycérol

6. Mine ou craie selon l'une des revendications 1, 3 à 5, ou enrobage selon l'une des revendications 2 à 5,
**caractérisée en ce que**
elle contient, en tant que sucres, du glucose, du fructose, du maltose et/ou du lactose.

7. Mine ou craie selon l'une des revendications 1, 3 à 6 ou enrobage selon l'une des revendications 2 à 6,
**caractérisée en ce que**
elle contient, en tant qu'alcool de sucre, du mannitol, du lactitol, du xylitol, de l'érythritol, de l'arabitol, du threitol, du sorbitol, de l'adonitol ou du dulcit.

8. Mine ou craie selon l'une des revendications 1, 3 à 7, ou enrobage selon l'une des revendications 2 à 7,
**caractérisée en ce que**
le composé hydroxylé aliphatique organique est présent à raison de 0,1 à 20 % en poids, en particulier à raison de 0,1 à 5 % en poids.

9. Mine ou craie selon l'une des revendications 1, 3 à 8, ou enrobage selon l'une des revendications 2 à 8,
**caractérisée en ce**
**que** la mine ou la craie contient au moins une charge, ladite au moins une charge étant notamment présente à raison de 0 à 80 % en poids, de préférence à raison de 10 à 60 % en poids, et/ou,
**que** l'enrobage contient au moins une charge, ladite au moins une charge étant notamment présente à raison de 40 à 80 % en poids.

10. Mine ou craie selon l'une des revendications 1, 3 à 9, ou enrobage selon l'une des revendications 2 à 9,
**caractérisée en ce**
**que** la mine ou la craie contient au moins une charge, ladite charge étant au moins une charge inorganique, en particulier du talc, de la poudre de pierre ponce, du kaolin, du mica, du silicate d'aluminium, de l'argile et/ou du carbonate de calcium, et/ou au moins une charge organique, et/ou
**que** l'enrobage contient au moins une charge, ladite charge étant au moins une charge organique, en particulier des fibres de bois et/ou des fibres de cellulose et/ou des fibres textiles.

11. Mine ou craie selon l'une des revendications 1, 3 à 10, ou enrobage selon l'une des revendications 2 à 10,
**caractérisée en ce**
**que** la mine ou la craie contient au moins un colorant, ledit au moins un colorant étant présent dans une proportion de 0,1 à 40 % en poids, en particulier une proportion comprise entre 1 et 40 % en poids, et/ou
**qu'**au moins un colorant est contenu dans l'enrobage, ledit au moins un colorant étant présent à raison de 0,1 à 40 % en poids, en particulier à raison de 0,1 à 20 % en poids.

12. Mine ou craie selon l'une des revendications 1, 3 à 11, ou enrobage selon l'une des revendications 2 à 11,
**caractérisée en ce que**
la matrice contient au moins un colorant, ledit colorant comprenant au moins un pigment inorganique et/ou au moins un pigment organique et/ou un colorant.

13. Mine ou craie selon l'une des revendications précédentes 1, 3 à 12, ou enrobage selon l'une des revendications 2 à 12,
**caractérisée en ce que**
la matrice contient d'autres cires et/ou triglycérides et/ou acides gras et/ou dérivés d'acides gras, en particulier des cires de paraffine, des cires de houille, des esters d'acides gras, notamment des esters de l'acide myristique, palmitique ou stéarique, de la cire de riz, de la cire d'abeille, des cires naturelles, notamment de la cire de carnauba, des cires de colza, des cires végétales durcies, notamment de l'huile de soja hydrogénée ou de l'huile de ricin hydrogénée, et/ou de l'acide stéarique.

14. Mine ou craie ou enrobage selon la revendication 13,
**caractérisée en ce que**
les autres cires et/ou triglycérides et/ou acides gras et/ou dérivés d'acides gras sont présents dans une proportion maximale de 30 % en poids, en particulier de 3 à 30 % en poids, de préférence dans une proportion de 5 à 20 % en poids.

15. Crayon comportant une mine ou une craie selon l'une des revendications 1 à 14 et/ou un enrobage selon l'une des revendications 2 à 14.
